# EUROPEAN PATENT APPLICATION

(11) **EP 4 322 369 A1**
(43) Date of publication of application: **14.02.2024**
(21) Application number: 23179977.6
(22) Date of filing: 19.06.2023
(51) Int. Cl.: H02J 7/00

(54) **ADAPTER**

(30) Priority: 28.07.2022 CN 202210900853; 28.07.2022 CN 202210898932; 28.07.2022 CN 202210900819; 28.07.2022 CN 202210898495
(71) Applicant: Nanjing Chervon Industry Co., Ltd., Nanjing, Jiangsu 211106 (CN)
(72) Inventor: GENG, Zheng, Nanjing, Jiangsu (CN); YUAN, Yuan, Nanjing, Jiangsu (CN); WEI, Yuli, Nanjing, Jiangsu (CN); TENG, Zhihai, Nanjing, Jiangsu (CN); ZHANG, Yuexiang, Nanjing, Jiangsu (CN)
(74) Representative: Sun, Yiming

(57) **Abstract**

Provided is an adapter. The adapter includes: a housing; a battery pack port including at least a positive terminal and a negative terminal for accessing a battery pack; a device port including multiple USB-type ports capable of accessing an electric device or a charging apparatus; a protocol matching module configured to perform a protocol handshake with the electric device or the charging apparatus accessed by the device port; and a bidirectional DC-DC conversion module capable of converting electrical energy outputted by the battery pack into direct current power supply electrical energy or converting electrical energy from the charging apparatus into direct current charging electrical energy. The bidirectional DC-DC conversion module includes: a power switching element disposed on the power transmission loop between the battery pack port and the device port and capable of adjusting the transmission direction and/or magnitude of electrical energy in the power transmission loop; and a power control unit electrically connected to at least the power switching element and capable of controlling the conducting state of the power switching element.

## Description

### TECHNICAL FIELD

The present application relates to the technical field of power conversion and, in particular, to an adapter.

### BACKGROUND

Cordless power tools are very convenient for outdoor user scenarios or other user scenarios which are not suitable for the deployment of power supply networks for tools. Battery packs and chargers provide necessary power support for the use of the cordless power tools. The power transmission or conversion between the three is a research focus in the field of power tools.

### SUMMARY

An object of the present application is to provide an adapter performing the power conversion between a charger or a battery pack or an electric device.

To achieve the preceding object, the present application adopts the technical solutions described below.

An adapter includes: a housing; a battery pack port including at least a positive terminal and a negative terminal for accessing a battery pack; a device port including multiple universal serial bus(USB) ports capable of accessing an electric device or a charging apparatus; a protocol matching module configured to perform a protocol handshake with the electric device or the charging apparatus accessed by the device port; and a bidirectional direct current-direct current (DC-DC) conversion module capable of converting electrical energy outputted by the battery pack into direct current power supply electrical energy or converting electrical energy from the charging apparatus into direct current charging electrical energy. The bidirectional DC-DC conversion module includes: a power switching element disposed on the power transmission loop between the battery pack port and the device port and capable of adjusting the transmission direction and/or magnitude of electrical energy in the power transmission loop; and a power control unit electrically connected to at least the power switching element and capable of controlling the conducting state of the power switching element.

In an example, the power transmission loop includes: the first transmission path between the positive terminal and the device port; and the second transmission path between the negative terminal and the device port.

In an example, the bidirectional DC-DC conversion module further includes a first energy storage element disposed on the first transmission path and capable of storing electrical energy during electrical energy transmission and discharging the electrical energy when the electrical energy transmission is interrupted.

In an example, the power switching element includes: a first switch connected in series on the first transmission path and capable of controlling the electrical energy transmission from the battery pack port to the device port; and a second switch connected in parallel between the first transmission path and the second transmission path and capable of controlling the electrical energy transmission from the device port to the battery pack port.

In an example, the adapter further includes a second energy storage element connected in parallel between the first transmission path and the second transmission path and capable of discharging the electrical energy to the device port.

In an example, the adapter further includes a third energy storage element connected in parallel between the first transmission path and the second transmission path and capable of discharging the electrical energy to the battery pack port.

In an example, the voltage across the battery pack port is higher than the voltage across the device port.

In an example, the voltage across the battery pack port is less than or equal to 100 V.

In an example, the voltage across the device port is less than or equal to 20 V.

In an example, the output power of the adapter is greater than or equal to 45 W and less than or equal to 240 W

In an example, the output power of the adapter is greater than or equal to 400 W and less than or equal to 600 W

In an example, the ratio of the volume of the adapter to the output power of the adapter is a power-to-volume ratio, where the power-to-volume ratio is higher than or equal to 0.1 W/cm³ and less than or equal to 0.2 W/cm³.

In an example, the volume of the adapter is greater than or equal to 4500 cm³ and less than or equal to 5000 cm³.

In an example, the working noise value of the adapter is greater than or equal to 45 dB and less than or equal to 55 dB.

In an example, the working noise value of the adapter is greater than or equal to 50 dB and less than or equal to 55 dB.

An adapter includes: a housing; a battery pack port including at least a positive terminal and a negative terminal for accessing a battery pack; a device port capable of accessing an electric device or a charging apparatus; a protocol matching module configured to perform a protocol handshake with the electric device or the charging apparatus accessed by the device port; and a bidirectional DC-DC conversion module capable of converting electrical energy outputted by the battery pack into direct current power supply electrical energy or converting electrical energy from the charging apparatus into direct current charging electrical energy. The bidirectional DC-DC conversion module includes: a power switching element disposed on the power transmission loop between the battery pack port and the device port to adjust the transmission direction and/or magnitude of electrical energy in the power transmission loop; and a power control unit electrically connected to at least the power switching element to control the conducting state of the power switching element; where the device port includes at least a bidirectional USB type-C interface.

An adapter includes: a housing; a battery pack port including at least a positive terminal and a negative terminal for accessing a battery pack; a device port including multiple USB-type ports capable of accessing an electric device or a charging apparatus; a protocol matching module configured to perform a protocol handshake with the electric device or the charging apparatus accessed by the device port; and a bidirectional DC-DC conversion module capable of converting electrical energy outputted by the battery pack into direct current power supply electrical energy or converting electrical energy from the charging apparatus into direct current charging electrical energy. The bidirectional DC-DC conversion module includes: a power switching element disposed on the power transmission loop between the battery pack port and the device port to adjust electrical energy in the power transmission loop; and a power control unit electrically connected to at least the power switching element to control the conducting state of the power switching element.

In an example, the voltage across the battery pack port is higher than the voltage across the device port.

In an example, the voltage across the battery pack port is less than or equal to 100 V.

In an example, the voltage across the device port is less than or equal to 20 V.

### BRIEF DESCRIPTION OF DRAWINGS

FIG. 1 is a structural view of an inverter adapter from a certain viewing angle according to an example of the present application;
FIG. 2 is a structural view of an inverter adapter from another viewing angle according to an example of the present application;
FIG. 3 is a schematic view of internal structures of an inverter adapter according to an example of the present application;
FIG. 4 is a view showing the assembly of a protective cover, a latch, a button, a first elastic body, and a terminal base of an inverter adapter according to an example of the present application;
FIG. 5 is an exploded view of a protective cover, a latch, a button, a first elastic body, and a terminal base of an inverter adapter according to an example of the present application;
FIG. 6 is an exploded view of a protective cover, a latch, a button, and a first elastic body of an inverter adapter according to an example of the present application;
FIG. 7 is a view showing the assembly of an upper housing, a first elastic body, and a side cover of an inverter adapter according to an example of the present application;
FIG. 8 is a schematic view showing part of structures of an inverter adapter according to an example of the present application;
FIG. 9 is a structural view of a lower housing, fans, and vibration damping structures of an inverter adapter according to an example of the present application;
FIG. 10 is an exploded view of a lower housing, fans, and vibration damping structures of an inverter adapter according to an example of the present application;
FIG. 11 is a structural view of a vibration damping structure of an inverter adapter according to an example of the present application;
FIG. 12 is a schematic circuit diagram of an adapter in an example of the present application; and
FIG. 13 is a schematic circuit diagram of an adapter in an example of the present application.

### DETAILED DESCRIPTION

The present application is described below in detail in conjunction with drawings and examples. It is to be understood that the examples described herein are intended to explain the present application and not to limit the present application. Additionally, it is to be noted that to facilitate description, only part, not all, of structures related to the present application are illustrated in the drawings.

In an example, an adapter may also be used as a charger, an inverter, or the like. The adapter may be built into a battery pack, a power tool, or other appliances. That is to say, as a power conversion apparatus, the adapter protected by the examples of the present application may have other names or may be built into other devices to perform power conversion.

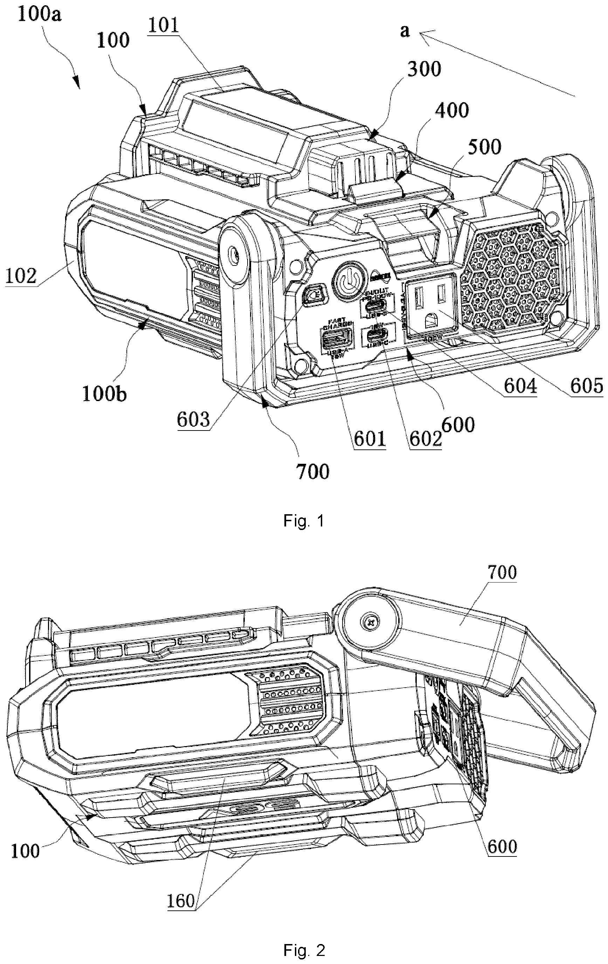

The present application provides an adapter 100a. As shown in FIGS. 1 to 4, the adapter 100a includes an adapter body 100, a battery pack port 200, a protective cover 300, a latch 400, and a device port 600. The adapter body 100 is a main mounting and protective component mainly used for mounting the battery pack port 200, the protective cover 300, the latch 400, and the device port 600. Specifically, the adapter body 100 includes a housing 100b forming a mounting cavity, where the mounting cavity is used for mounting main structures of the adapter body 100 such as a control board, a power element, and a heat dissipation element.

In this example, with continued reference to FIG. 1, the housing 100b includes an upper housing 101 and a lower housing 102, where the upper housing 101 is engaged with the lower housing 102, the upper housing 101 can be detachably connected to the lower housing 102, and the inner wall surface of the upper housing 101 and the inner wall surface of the lower housing 102 surround and form the mounting cavity. In some other examples, the housing includes a left housing and a right housing, where the inner wall surface of the left housing and the inner wall surface of the right housing surround and form the mounting cavity. The housing is a structure into which two half housings are assembled so that it is easy to mount the preceding main structures in the mounting cavity and the maintenance and replacement of the main structures are implemented.

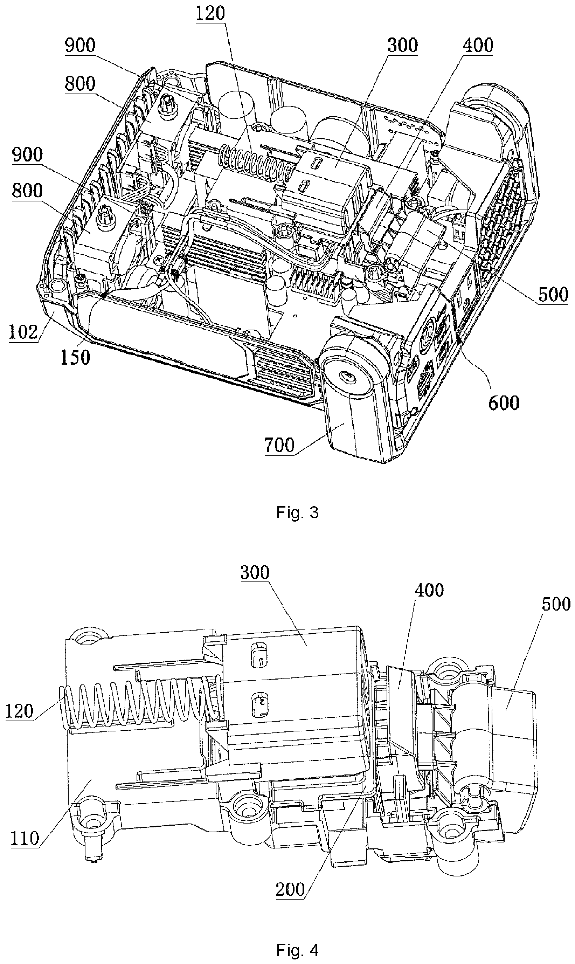

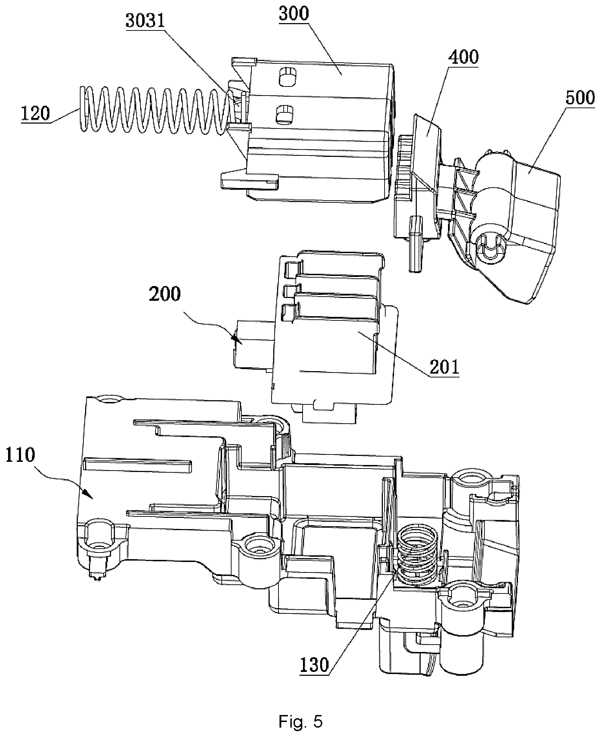

As shown in FIGS. 4 and 5, the battery pack port 200 is fixedly disposed on the adapter body 100 and is used for the connection to the battery pack. Specifically, the battery pack port 200 includes a positive terminal and a negative terminal, where the positive terminal is used for accessing the positive electrode structure of the battery pack and a negative terminal is used for accessing the negative electrode structure of the battery pack. In this example, a mounting opening communicating with the mounting cavity is formed on the upper housing 101, the battery pack port 200 is fixedly disposed in the mounting cavity, and the positive terminal and the negative terminal protrude from the outside of the upper housing 101 through the mounting opening so that the positive terminal and the negative terminal can be flexibly and accurately joined to the positive electrode structure of the battery pack and the negative electrode structure of the battery pack, respectively.

In order that the battery pack port 200 are protected so that foreign matters are prevented from entering the battery pack port 200 and affecting a conductive effect after the battery pack port 200 is joined to the battery pack, the adapter 100a in this example further includes the protective cover 300. As shown in FIGS. 1 to 6, the protective cover 300 is movably disposed on the adapter body 100 along a first direction a. During the movement of the protective cover 300 along the first direction a, the protective cover 300 can be moved to a protective position for the protective cover 300 to cover the battery pack port 200 and can be moved to an avoidance position for the protective cover 300 to be misaligned with the battery pack port 200 so that the battery pack port 200 can be connected to the battery pack.

It is to be noted that the first direction a is parallel to the length direction of the adapter body 100 in this example. Of course, in other examples, the first direction a may be the width direction of the adapter body 100, a direction forming an included angle with the length direction of the adapter body 100, or a direction forming an included angle with the width direction of the adapter body 100 according to requirements.

In addition, it is to be explained that the initial position of the protective cover 300 is the protective position and only when the battery pack needs to be joined, the protective cover 300 is driven by an external force to move from the protective position to the avoidance position. In addition, the force for driving the protective cover 300 to move along the first direction a may be directly from an operator, that is, the operator manually pushes the protective cover 300 from the protective position to the avoidance position so that the battery pack port 200 is exposed and then the battery pack is connected to the battery pack port 200. Alternatively, the force for driving the protective cover 300 to move along the first direction a may be from the pushing of the battery pack, that is, an operator holds the battery pack by hand and moves the battery pack along the first direction a, and the battery pack abuts against an end of the protective cover 300 during the movement so that the battery pack is pushed from the protective position to the avoidance position and is gradually joined with the battery pack port 200 during the movement of the protective cover 300. The adapter 100a is provided with the protective cover 300 capable of protecting the battery pack port 200, thereby reducing the probability that the battery pack port 200 is damaged and improving cleanliness.

The latch 400 is used for locking the battery pack when the joining of the battery pack to the battery pack port 200 is completed so that the battery pack is prevented from being disengaged from the battery pack port 200 accidentally. Specifically, the latch 400 is disposed on the adapter body 100 along a second direction in an elevatable manner, where the second direction is a vertical direction in this example, and the battery pack can drive the latch 400 to move downward and can be locked by the latch 400 in the process where the protective cover 300 is driven to move from the protective position to the avoidance position. Since the latch 400 locks the battery pack joined to the battery pack port 200, the strength of the connection between the battery pack and the battery pack port 200 is improved. Only when the latches 400 are unlocked, the battery pack can be disengaged from the battery pack port 200, thereby greatly improving the use stability of the battery pack. Optionally, to improve the locking effect of the latch 400 on the battery pack, a locking slot is disposed on the battery pack, and a locking end 401 of the latch 400 can be engaged in the locking slot. The adapter 100a is provided with the latch 400 so that the stability after the battery pack port 200 is connected to the battery pack can be improved.

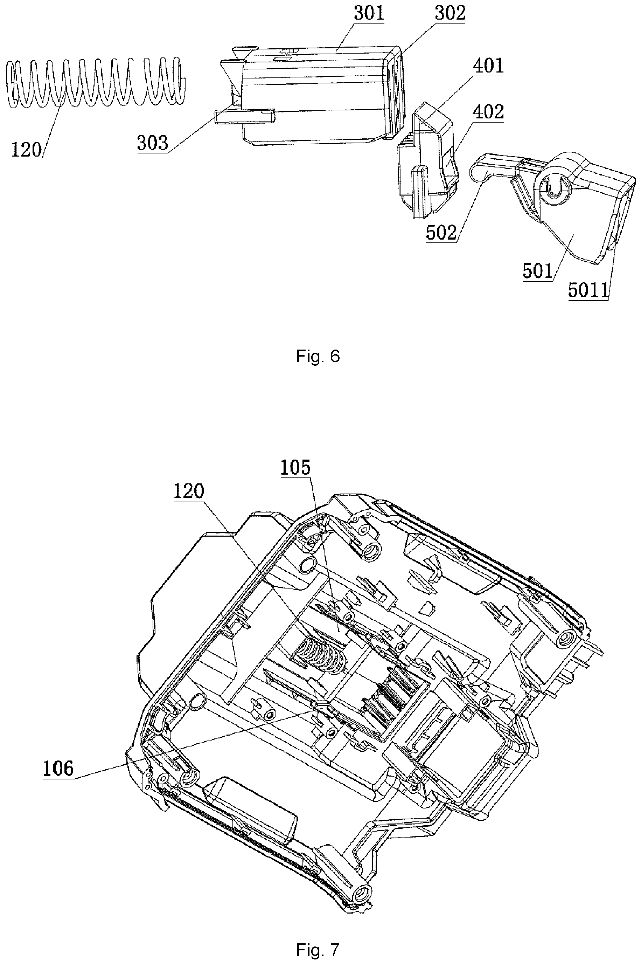

In some examples, as shown in FIG. 6, the protective cover 300 includes a cover plate 301 and an end plate 302, where the cover plate 301 has a U-shaped structure, the end plate 302 covers an end of the cover plate 301, multiple protective teeth are spaced on the cover plate 301 along the vertical direction, and an insertion slot is formed between two adjacent protective teeth. Correspondingly, the positive terminal of the battery pack port 200 and the negative terminal of the battery pack port 200 include multiple spaced terminal plates 201, and the terminal plates 201 are disposed along the first direction a. When the protective cover 300 covers the battery pack port 200, the terminal plates 201 are configured to correspond to insertion slots. When the protective cover 300 is moved along the first direction a, the insertion slots can avoid the terminal plates 201, and the terminal plates 201 can guide the movement of the protective cover 300.

In some examples, with continued reference to FIG. 5, the adapter body 100 further includes a terminal base 110 disposed in the mounting cavity and used for mounting the battery pack port 200. That is to say, the terminal base 110 is disposed in an upper mounting cavity formed by the upper housing 101, a limiting space is formed between the plane where the top surface of the terminal base 110 is located and the inner top of the upper housing 101, and part of structures of the protective cover 300 are disposed in the limiting space and can be limited in the vertical direction. The part of the structures of the protective cover 300 are placed in the limiting space, and the portion of the protective cover 300 entering the limiting space gradually becomes larger as the protective cover 300 is moved from the protective position to the avoidance position. Therefore, the limiting effect of the housing on the protective cover 300 can be improved and the protective cover 300 can be prevented from being skewed or disengaged from the housing.

Further, as shown in FIG. 7, slides 105 are disposed in the limiting space along the first direction a, the protective cover 300 is slidably connected in the slides 105, and the accuracy with which the protective cover 300 moves along the first direction a is improved by the slides 105. Optionally, a slide 105 may be a sliding slot structure disposed on the inner wall surface of the upper housing 101 or a sliding slot structure disposed on the top surface of the terminal base 110. Alternatively, a slide 105 may be formed of two slide plates protruding from the inner wall surface of the upper housing 101 or two slide plates protruding from the top surface of the terminal base 110, and the slide 105 may be formed between the two slide plates. Alternatively, a sliding slot structure and slide plates may exist at the same time, where the sliding slot structure is disposed on one of the inner wall surface of the upper housing 101 and the top surface of the terminal base 110, the slide plates are disposed on the other one of the inner wall surface of the upper housing 101 and the top surface of the terminal base 110, and two ends of the protective cover 300 in the vertical direction are disposed between the sliding slot structure and the two slide plates separately. Further, with continued reference to FIG. 7, limiting members 106 are further disposed in the limiting space and are used for limiting the protective cover 300 in the vertical direction. Optionally, a limiting member 106 may be a limiting plate or a limit slot, and the limiting plate may be connected to the inner wall surface of the upper housing 101 or may protrude from the terminal base 110.

Further, to enable the protective cover 300 to be automatically reset after the battery pack is pulled out of the battery pack port 200, as shown in FIGS. 3 to 7, the adapter 100a further includes a first elastic member 120 disposed in the adapter body 100 along the first direction a, where one end of the first elastic member 120 is fixedly connected to the protective cover 300, and the other end of the first elastic member 120 is fixedly disposed. It is to be noted that "fixedly disposed" here refers to that the position of the other end of the first elastic member 120 keeps fixed. Specifically, the other end of the first elastic member 120 is fixedly connected to the housing or is fixed to other parts in the mounting cavity, which is not specifically limited here, as long as the fixing can be implemented. During the movement of the protective cover 300 from the protective position to the avoidance position, the first elastic member 120 is compressed and stores elastic potential energy. After the battery pack is disengaged from the battery pack port 200, the protective cover 300 can be automatically reset under the driving of the first elastic member 120 and is reset from the avoidance position to the protective position, so that the phenomenon that the reset is forgotten because the reset needs to be performed manually can be avoided.

In some examples, the first elastic member 120 is a spiral spring. Optionally, with continued reference to FIGS. 6 and 7, to implement that the first elastic member 120 is fixedly connected to the protective cover 300, the protective cover 300 further includes a side cover 303 covering the side of the cover plate 301 facing away from the end plate 302, where an insertion slot corresponding to the terminal plate 201 is disposed on the side cover 303 to avoid the terminal plate 201 during the movement of the protective cover 300, an insertion column 3031 is disposed on the outer side of the side cover 303 facing away from the cover plate, and the insertion column 3031 is inserted into the first elastic member 120. Further, optionally, the insertion column 3031 has a cross-shaped structure.

To enable the latch 400 to be automatically reset after the battery pack is pulled out of the battery pack port 200, with continued reference to FIG. 5, the adapter 100a further includes a second elastic member 130 disposed in the adapter body 100 along the second direction, where one end of the second elastic member 130 is connected to the latch 400, and the other end of the second elastic member 130 is fixedly disposed. It is to be noted that "fixedly disposed" here refers to that the position of the other end of the second elastic member 130 keeps fixed. Specifically, the other end of the second elastic member 130 is fixedly connected to the housing or is disposed on the other parts in the mounting cavity, which is not specifically limited, as long as the fixing can be implemented. During the movement of the protective cover 300 from the protective position to the avoidance position, the second elastic member 130 is compressed and stores the elastic potential energy. After the battery pack is disengaged from the battery pack port 200, the latch 400 can be automatically reset under the driving of the second elastic member 130 so as to perform the next locking action. In addition, the second elastic member 130 is provided so that the locking force of the latch 400 on the battery pack can be increased and the probability that the battery pack is disengaged from the battery pack port 200 is further reduced. In some examples, the second elastic member 130 is a spiral spring.

Further, to facilitate the unlocking of the latch 400 from the battery pack, as shown in FIGS. 3 to 6, the adapter 100a further includes a button 500, where the middle portion of the button 500 is rotatably connected to the adapter body 100, specifically rotatably connected to the upper housing 101 by a rotating shaft, and a position for the rotatable connection is located on the side of the latch 400 facing away from the battery pack port 200. One end of the button 500 is a triggered end 501, and the other end of the button 500 is a pressed end 502. When the triggered end 501 is triggered to rotate upward, the pressed end 502 can rotate downward, thereby driving the latch 400 to move downward.

It is to be noted that in this example, the opening of the locking slot is downward, and the latch 400 extends into the locking slot from top to bottom. Therefore, when the unlocking of the latch 400 from the battery pack is necessary, the triggered end 501 needs to be driven to rotate upward such that the pressed end 502 continues moving downward until the pressed end 502 drives the latch 400 to move downward to be disengaged from the locking slot. At this time, the battery pack is horizontally pulled out so that the battery pack can be disengaged from the battery pack port 200.

Optionally, in some examples, with continued reference to FIG. 6, a sidewall of the latch 400 is provided with an insertion hole 402 and the pressed end 502 of the button 500 extends into the insertion hole 402 so that the effect with which the button 500 presses the latch 400 can be improved. With continued reference to FIG. 6, to facilitate the application of a force to the button 500, a triggering slot 5011 is disposed at the triggered end 501, and the operator may put a finger into the triggering slot 5011 to trigger the button 500, thereby facilitating the application of the force.

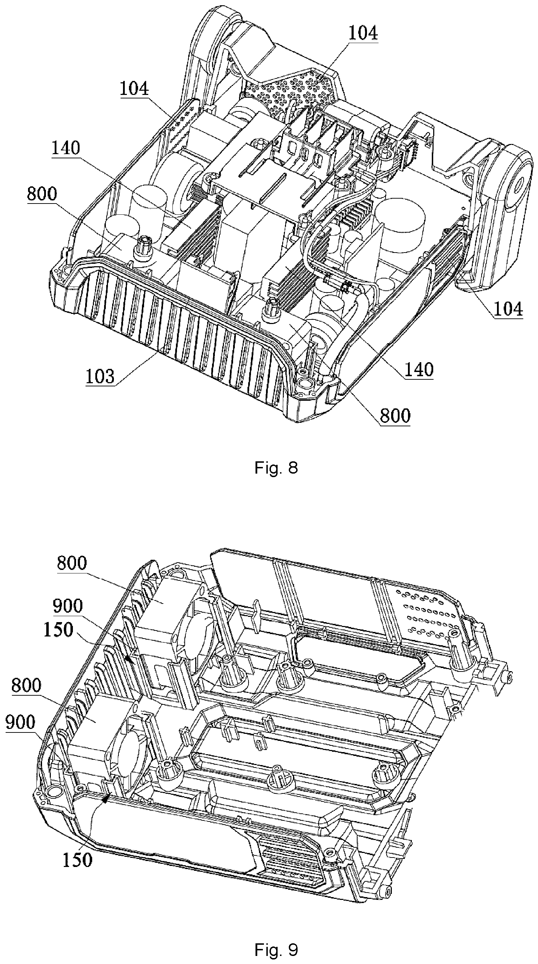

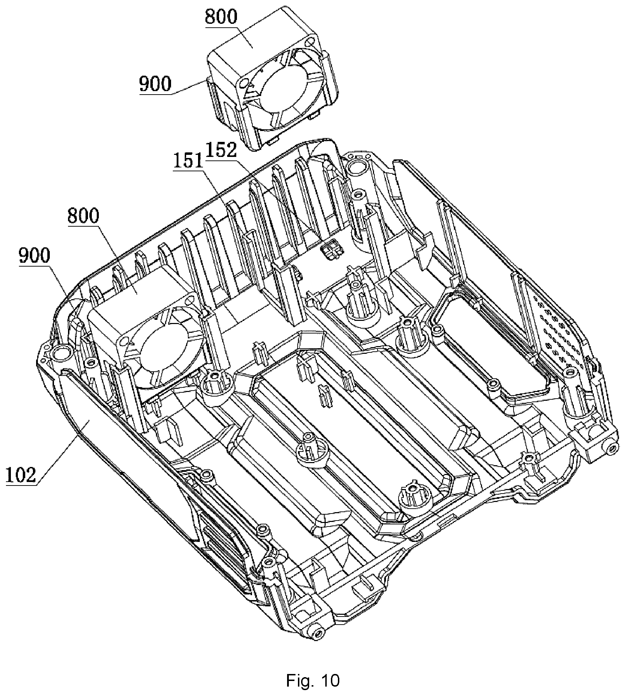

With continued reference to FIG. 1, the device port 600 is used for accessing an electric device or a charging apparatus. As an output structure of the adapter 100a, the device port 600 can output a direct current to be used by a direct current electric device such as a direct current power tool. The device port 600 may be provided with a fast charging interface 601, a normal charging interface 602, and an alternating current charging interface 605 which can be directly connected to alternating current mains. In an example, the fast charging interface 601 may be a USB interface, for example, a type-A interface, which can charge the electric device fast. In an example, the fast charging interface 601 may be connected to an on-board charger, a solar charger, or the like. The normal charging interface 602 may include a unidirectional type-C interface and a bidirectional type-C interface. The battery pack may be charged with electrical energy inputted from the unidirectional type-C interface while the bidirectional type-C interface may not only charge the battery pack by accessing electrical energy but also transmit electrical energy outputted by the battery pack to the electric device. The alternating current mains may be directly accessed by the alternating current charging interface 605 so that the battery pack is charged. It is to be noted that the device port 600 is disposed at an end of the adapter body 100 in the first direction a and is connected to and mates with the main structures in the housing to implement the function of the adapter 100a. The main structures, the battery pack port 200, and the device port 600 mate with each other, which belongs to the existing art, and the details are not repeated here. The adapter 100a generates a large amount of heat in a working process. To dissipate the heat fast, as shown in FIGS. 8 to 10, fans 800 are further disposed in the housing, where the flow of air in the housing can be promoted through the rotation of the fans 800, thereby implementing heat exchange and reaching the object of heat dissipation. However, when the fans 800 work, a lot of vibration and noise are generated. For damping the vibration and reducing the noise, vibration damping structures 900 are further disposed in the housing of the adapter 100a. As shown in FIGS. 9 and 10, the vibration damping structures 900 are disposed in the mounting cavity, a vibration damping structure 900 has an abutting portion in contact with the inner wall surface of the housing, the ratio of the contact area A of the abutting portion and the housing to the area B of the outer wall surface of the vibration damping structure 900 is lower than 1, the vibration damping structure 900 has a vibration damping cavity, and a fan 800 is limited in the vibration damping cavity.

The adapter 100a is provided with the vibration damping structures 900, the vibration and noise in the working processes of the fans 800 are absorbed by the vibration damping structures 900, and the contact area A of the vibration damping structure 900 and the lower housing 102 is limited to be less than or equal to 1 so that a vibration damping effect and a noise reduction effect are improved, thereby reducing the vibration and noise in the working process of the adapter 100a and improving user experience.

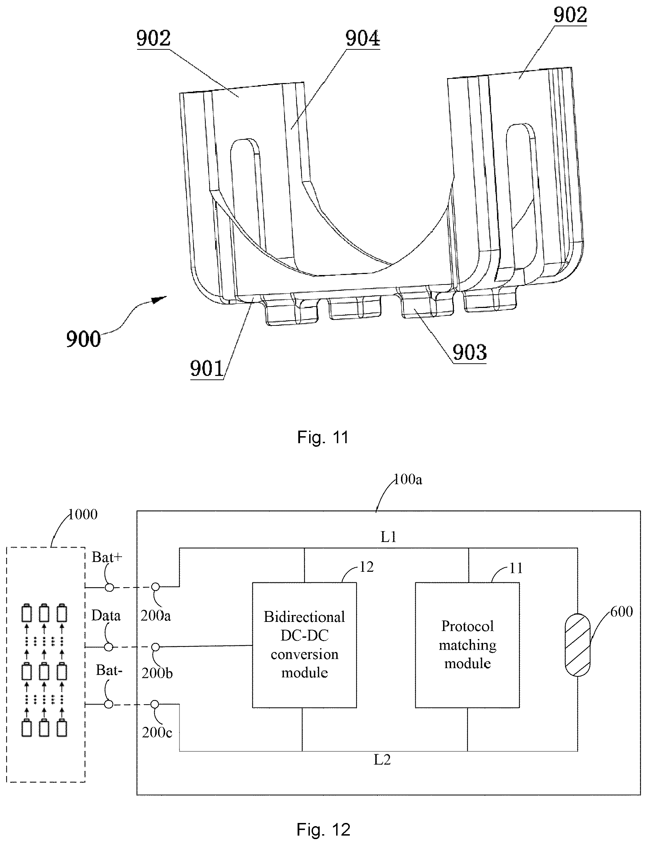

In some examples, as shown in FIG. 11, the vibration damping structure 900 includes two vibration damping side plates 902 and a vibration damping base plate 901 which are in a U-shaped connection, where the inner wall surface of the vibration damping base plate 901 and the inner wall surfaces of the vibration damping side plates 902 surround and form the vibration damping cavity, and first limiting structures for limiting the fan 800 in the vibration damping cavity are disposed on the vibration damping side plates 902. Optionally, a first limiting structure is a flange 904 disposed at the edge or corner of a vibration damping side plate 902, where the flange 904 is configured to extend into the vibration damping cavity and is used for abutting against the fan 800 disposed in the vibration damping cavity. The vibration damping structure 900 has a simple structure and is easy to manufacture. Optionally, the vibration damping base plate 901 and the two vibration damping side plates 902 may be provided with weight reduction holes so that the weights of the vibration damping structures 900 and the weight of the adapter 100a are reduced. Further, optionally, a weight reduction hole may have a regular shape such as an elongated hole, a circular hole, or a waist-shaped hole or may have an irregular shape, as long as the weights can be reduced and the vibration damping effect is not reduced.

In some examples, more specifically, with continued reference to FIG. 11, the abutting portion includes protruding blocks 903 protruding from the outer wall surface of the vibration damping base plate 901, and the protruding blocks 903 are in contact with the inner wall surface of the lower housing 102. Optionally, multiple protruding blocks 903 may be provided according to the requirements and are arranged in a rectangular array on the outer wall surface of the vibration damping base plate 901. In this example, as shown in FIG. 11, four protruding blocks 903 are provided.

Further, with continued reference to FIG. 10, support blocks 152 are disposed on the inner wall surface of the housing and are in contact with the protruding blocks 903, thereby further improving the vibration damping effect. Optionally, a support block 152 is a cross-shaped rib. Multiple support blocks 152 are provided and arranged regularly.

To further improve the stability of the vibration damping structure 900 in the housing, a second limiting structure is disposed on the inner wall surface of the lower housing 102 and used for limiting the position of the vibration damping structure 900 in the mounting cavity. The second limiting structure is provided so that the vibration damping structure 900 can be prevented from shaking in the lower housing 102, which is conducive to further improving the vibration damping effect.

In some examples, with continued reference to FIG. 10, a second limiting structure 150 includes four L-shaped limiting columns 151 arranged in a rectangle so that a limiting space is formed within the four L-shaped limiting columns 151. The limiting space is adapted to the U-shaped vibration damping structure 900, and the vibration damping structure 900 can be inserted into the limiting space with the vibration damping base plate 901 downward so the vibration damping structure 900 is limited.

Further, two ends of an L-shaped limiting column 151 are folded toward the inner side of the limiting space, thereby forming abutting flanges abutting against the outer wall surface of the vibration damping structure 900. Thus, a frictional force applied to the vibration damping structure 900 entering and exiting the limiting space can be reduced, thereby improving the flexibility in the entrance into and exit from the limiting space by the vibration damping structure 900. Of course, in other examples, other numbers of L-shaped limiting columns 151 may be provided according to the requirements, for example, six or eight. A limiting column may be configured to have another shape according to the requirements, for example, the shape of a flat plate.

Optionally, the abutting portion further includes a contact portion in contact with the second limiting structure so that the limiting effect of the second limiting structure on the vibration damping structure 900 is further improved and the vibration damping effect is improved.

It is to be noted that one or more fans 800 may be disposed in the mounting cavity according to the requirements. Accordingly, one or more vibration damping structures 900 may be disposed. The multiple fans 800 are correspondingly inserted into the vibration damping cavities of the multiple vibration damping structures 900 so that vibration is damped separately and a better vibration damping effect is achieved.

Further, with continued reference to FIG. 8, an air duct is formed in the mounting cavity, passes through the fan 800, and has at least one air inlet 103 and multiple air outlets 104, and the multiple air outlets 104 are disposed on different sidewalls of the adapter body 100. Air entering the air duct from the air inlet 103 flows out from the different air outlets 104 so that the heat of multiple components in the housing is dissipated at the same time and a better heat dissipation effect is achieved. In this example, three air outlets 104 are provided, where the one air inlet 103 and the three air outlets 104 are disposed at four different sides of the housing separately so that the air enters from the one inlet and exits from the three outlets, thereby achieving high heat dissipation efficiency and a good heat dissipation effect.

In some examples, with continued reference to FIG. 8, heat dissipation fins 140 are disposed in the air duct and abut against components to be cooled in the mounting cavity of the housing, and a heat dissipation fin 140 includes multiple heat dissipation teeth configured to extend along the direction in which an airflow flows in the air duct. The heat dissipation fin 140 can achieve the effect of guiding the airflow to flow so that the rate of heat exchange is increased, thereby improving the heat dissipation effect. In this example, the heat dissipation fins 140 have comb-teeth structures made of aluminum profiles. Of course, in addition to the heat dissipation fins 140, a flow guide rib may also be disposed in the air duct, may be configured to have the shape of a straight line, a polyline, or a curved line according to the requirements, and can reach the object to guide the airflow to flow according to a predetermined trajectory.

Further, with continued reference to FIG. 1, a start button 604 is further disposed on the adapter 100a, and the start button 604, the device port 600, and the control switch of the battery pack are disposed on the same side when the assembly of the adapter 100a and the battery pack is completed.

Further, referring to FIG. 2, the adapter 100a further includes an illumination mechanism 160 disposed on the adapter body 100. Specifically, the illumination mechanism 160 may be disposed on the upper housing 101 or the lower housing 102. Optionally, the illumination mechanism 160 includes a light-emitting diode (LED) lamp disposed at the lower surface of the adapter body 100. With continued reference to FIG. 1, an illumination lamp switch 603 controlling the illumination mechanism 160 to be on or off is disposed on an output port.

Further, with continued reference to FIGS. 1 and 2, the adapter 100a further includes a handle 700 rotatably connected to the adapter body 100 and having multiple rotation positions. Optionally, the handle 700 is a U-shaped structure manufactured with foaming and injection molding techniques. The number of rotation positions is not specifically limited and is set according to the requirements.

With the expansion of the use range of the adapter 100a, people's requirements for the output power of the adapter 100a become increasingly high. When the output power of an existing adapter 100a is increased, the volume of the existing adapter 100a also is greatly increased, which results in the relatively low power-to-volume ratio of the existing adapter 100a and is not conducive to implementing the miniaturization of the adapter 100a. In this example, the ratio of the volume of the adapter 100a to the output power of the adapter 100a is a power-to-volume ratio, where the power-to-volume ratio is higher than or equal to 0.1 W/cm³ and less than or equal to 0.2 W/cm³. The adapter 100a provided by the present application has a higher power-to-volume ratio than the existing adapter 100a, which is conducive to implementing the miniaturization of the adapter 100a on the premise that the same power is output.

Optionally, the power-to-volume ratio of the adapter 100a is higher than or equal to 0.1 W/cm³ and less than or equal to 0.15 W/cm³, for example, 0.1 W/cm³, 0.11 W/cm³, 0.12 W/cm³, 0.13 W/cm³, 0.14 W/cm³, or 0.15 W/cm³.

In this example, the output power of the adapter 100a is greater than or equal to 400 W and less than or equal to 600 W, for example, 400 W, 450 W, 480 W, 550 W, 570 W, or 600 W

In this example, the volume of the adapter 100a is greater than or equal to 4500 cm³ and less than or equal to 5000 cm³, for example, 4500 cm³, 4600 cm³, 4700 cm³, 4800 cm³, 4900 cm³, or 5000 cm³. Further, optionally, in some examples, the volume of the adapter 100a is greater than or equal to 4700 cm³ and less than or equal to 5000 cm³.

In this application, the volume of the adapter 100a is the product of the length, the width and the height of the adapter 100a when the handle 700 is in the stowed state in FIG. 1.

In this example, the working noise value of the adapter 100a is greater than or equal to 45 dB and less than or equal to 55 dB, for example, 45 dB, 47 dB, 49 dB, 53 dB, and 55 dB. Optionally, in some other examples, the working noise value of the adapter 100a is greater than or equal to 50 dB and less than or equal to 55 dB.

In this example, as shown in FIG. 12, the battery pack port 200 may include a positive terminal 200a and a negative terminal 200b which can be electrically connected to the positive/negative terminal of a battery pack 1000 to access the battery pack 1000. In an example, the battery pack port 200 may also include a communication port 200c to be communicatively connected to a communication terminal on the battery pack 1000. The device port 600 can access other electric devices or chargers. The electric devices may include various household appliances or power tools, for example, a smartphone, a laptop computer, and a stirrer. In this example, the device port 600 may include multiple USB-type ports, for example, a type-A port, a type-B port, and a type-C port. In an example, the multiple USB-type ports may be USB ports of the same type, or may be USB ports of different types. In an example, the device port 600 may also include power output interfaces of other types, which are not listed here.

In an example, the multiple USB-type ports may be centrally disposed at adjacent or close positions or may be disposed on different end surfaces of the adapter 100a separately, or the positional relationships of the multiple USB-type ports may be adjusted adaptively according to the use habits of the user.

In an example, the output power of the adapter 100 is greater than or equal to 45 W and less than or equal to 240 W, for example, 45 W, 50 W, 60 W, 70 W, 90 W, 100 W, 150 W, 200 W, or 240 W, where the output power may include power outputted to the battery pack or power outputted to the electric device. In some examples, the output power of the adapter 100a 100 is greater than or equal to 60 W and less than or equal to 200 W In some examples, the output power of the adapter 100a 100 is greater than or equal to 80 W and less than or equal to 150 W

In an example, the voltage across the battery pack port 200 is less than or equal to 100 V, that is to say, the adapter 100 can access the battery pack with a voltage less than or equal to 100 V. In an example, the adapter 100 can access a battery pack with a rated voltage of 35 V to 64 V. In an example, the adapter 100 can access a battery pack with a rated voltage of 56 V to 100 V.

In an example, the voltage across the device port 600 is less than or equal to 20 V. That is to say, the rated voltage of the electric device accessed by the adapter 100 is less than or equal to 20 V. In an example, the rated voltage of the electric device accessed by the adapter 100 is higher than or equal to 3.3 V and less than or equal to 20 V.

Referring to FIG. 12, a power circuit portion in the adapter 100 may include at least a protocol matching module 11 and a bidirectional DC-DC conversion module 12. The protocol matching module 11 is configured to perform a protocol handshake with the electric device or the charging apparatus accessed by the device port 600, that is, the protocol matching module 11 may confirm the identity of the electric device or the identity of the charging apparatus with a handshake protocol. In an example, after confirming the identity of the electric device or the identity of the charging apparatus, the protocol matching module 11 may control a loop switch in an electrical energy transmission loop to be turned on so that the electrical energy is transmitted, and otherwise, the loop switch is controlled to be turned off and the electrical energy transmission is prevented. The bidirectional DC-DC conversion module 12 can convert the electrical energy outputted by the battery pack into direct current power supply electrical energy or convert electrical energy from the charging apparatus into direct current charging electrical energy. That is to say, the bidirectional DC-DC conversion module 12 can transmit electrical energy in different flow directions.

In this example, the bidirectional DC-DC conversion module 12 may include at least a power switching element 121 and a power control unit 122. The power switching element 121 is disposed on the power transmission loop between the battery pack port 200 and the device port 600 and can adjust electrical energy in the power transmission loop. For example, the transmission direction and/or magnitude of the electrical energy in the power transmission loop can be adjusted. The power control unit 122 is electrically connected to at least the power switching element 121 and can control the conducting state of the power switching element 121. In this example, the power switching element 121 has different conducting states, and the electrical energy outputted by the bidirectional DC-DC conversion module 12 may have different magnitudes and/or directions.

In an example, the power transmission loop between the battery pack port 200 and the device port 600 may include the first transmission path L1 between the positive terminal 200a and the device port 600 and the second transmission path L2 between the negative terminal 200b and the device port 600. That is to say, the first transmission path L1 and the second transmission path L2 can constitute a complete power transmission loop.

In an example, the power switching element 121 includes: a first switch Q1 connected in series on the first transmission path L1 and capable of controlling the electrical energy transmission from the battery pack port 200 to the device port 600; and a second switch Q2 connected in parallel between the first transmission path L1 and the second transmission path L2 and capable of controlling the electrical energy transmission from the device port 600 to the battery pack port 200. That is to say, the power control unit 122 in the present application can change the transmission direction of the electrical energy in the power transmission loop by controlling the conducting states of the two power switching elements Q1 and Q2. In an example, the gate terminal of the first switch Q1 and the gate terminal of the second switch Q2 may be electrically connected to the power control unit 122 and are used for receiving control signals from the power control unit 122, where the control signals may be pulse-width modulation (PWM) signals. The drain or source of each power switching element is connected to the first transmission path L1 and the second transmission path L2. In an example, the drain of the first switch Q1 may be electrically connected to the source of the second switch Q2, or the source of the first switch Q1 may be electrically connected to the drain of the second switch Q2.

In an example, the first switch Q1 may be disposed on the second transmission path L2, and the second switch Q2 is connected in parallel between the first transmission path L1 and the second transmission path L2.

In an example, the power switching element 121 may be a controllable semiconductor power device (for example, a field-effect transistor (FET), a bipolar junction transistor (BJT), or an insulated-gate bipolar transistor (IGBT)) or may be any other type of solid-state switches, for example, the insulated-gate bipolar transistor (IGBT) or the bipolar junction transistor (BJT).

In an example, the bidirectional DC-DC conversion module 12 may further include a first energy storage element 123. This element may be disposed on the first transmission path L1 and can store the electrical energy during the electrical energy transmission and discharge the electrical energy when the electrical energy transmission is interrupted. In an example, the first energy storage element 123 may be an inductor. One end of the first energy storage element 123 may be electrically connected to the drain or source of the first switch Q1 and electrically connected to the source or drain of the second switch Q2, and the other end of the first energy storage element 123 can be connected to the device port 600.

In an example, the adapter 100 may further include a second energy storage element 13 connected in parallel between the first transmission path L1 and the second transmission path L2 and capable of discharging the electrical energy to the device port 600; and a third energy storage element 14 connected in parallel between the first transmission path L1 and the second transmission path L2 and capable of discharging the electrical energy to the battery pack port 200. In an example, the second energy storage element 13 and the third energy storage element 14 may be capacitors, and the types of the capacitors are not limited here.

In the examples of the present application, the first energy storage element 123, the second energy storage element 13, and the third energy storage element 14 may each store and discharge the electrical energy within one cycle in which the adapter 100 transmits the electrical energy. In other words, the power switching element can be turned on or off at a certain frequency in the electrical energy transmission cycle. To prevent the electrical energy transmission from being affected, a responsive energy storage element can store the electrical energy when the power switching element is turned on and the electrical energy is transmitted and can discharge the electrical energy when the power switching element is turned off and the electrical energy transmission is blocked.

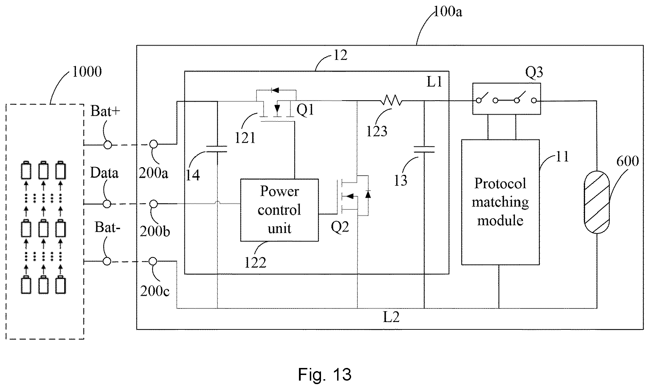

Referring to FIG. 13, one end of the third energy storage element 14 is connected to the positive terminal 200a, and the other end of the third energy storage element 14 is connected to the negative terminal 200b. The output terminal of the power control unit 122 is connected to the gate of the first switch Q1 and the gate of the second switch Q2, and the power control unit 122 can output the control signals to control the conducting states of the two switches. Each of the first switch Q1 and the second switch Q2 is connected in parallel to a body diode D. The drain of the first switch Q1 is connected to the positive terminal, and the source of the first switch Q1 is connected to one end of the first energy storage element 123 and the drain of the second switch Q2. The drain of the second switch Q2 is connected to the source of the first switch Q1, and the source of the second switch Q2 can be connected to the negative terminal. One end of the first energy storage element 123 is connected to the source of the first switch Q1 and the drain of the second switch Q2. The other end of the first energy storage element 123 can be connected to the positive electrode of the device port 600 and one end of the second energy storage element 13. The second energy storage element 13 is connected in parallel between the first transmission path L1 and the second transmission path L2, where one end of the energy storage element 13 is connected to the first energy storage element 123 and the positive electrode of the device port 600, and the other end of the energy storage element 13 is connected to the negative terminal 200b and the negative electrode of the device port 600. The third energy storage element 14 is connected in parallel between the first transmission path L1 and the second transmission path L2, where one end of the energy storage element 14 is connected to the positive terminal 200a and the drain of the first switch Q1, and the other end of the energy storage element 14 is connected to the negative terminal 200b.

In this example, as shown in FIG. 13, a loop switch Q3 is further included and is disposed on the first transmission path L1. The loop switch Q3 may be turned on or off under the control of the protocol matching module 11.

In an example, when the battery pack port 200 accesses the battery pack 1000 and the device port 600 accesses the electric device, the adapter 100 can perform power conversion on the electrical energy of the battery pack to power the electric device. In a specific implementation, after the protocol matching module 11 confirms the identity of the accessed electric device through the handshake protocol, the loop switch Q3 may be controlled to be turned on so that the power transmission loop constituted by the first transmission path L1 and the second transmission path L2 is turned on. It is to be understood that the power control unit 122 may recognize the conducting state of the loop switch Q3 or can receive identity confirmation information sent by the protocol matching module 11. Thus, the first switch Q1 is controlled to be turned on and the second switch Q2 is controlled to be turned off so that the electrical energy is allowed to be outputted from the battery pack port 200 to the device port 600 along the first transmission path L1 and the electric device is powered. In an optional example, when controlling the first switch Q1 to be turned on, the power control unit 122 may also control the second switch Q2 to be turned on. In the process where the battery pack discharges, the power control unit 122 may control the first switch Q1 to be turned on and off at a certain frequency, where the first energy storage element 123 can store the electrical energy when the first switch Q1 is turned on and electricity is discharged and can discharge the electrical energy when the first switch Q1 is turned off, so that energy stored in the first energy storage element 123 can be transferred to the load at the back end. In addition, the second energy storage element 13 and the first energy storage element 123 may perform filtering and energy storage so that the voltage and current at the back end are relatively smooth.

In an example, when the battery pack port 200 accesses the battery pack and the device port 600 accesses the charging apparatus, for example, the charger, the adapter 100a can perform the power conversion on the electrical energy accessed by the charger to charge the battery pack. In a specific implementation, after the protocol matching module 11 confirms the identity of the accessed electric device through the handshake protocol, the loop switch Q3 may be controlled to be turned on so that the power transmission loop constituted by the first transmission path L1 and the second transmission path L2 is turned on. It is to be understood that the power control unit 122 may recognize the conducting state of the loop switch Q3 or can receive the identity confirmation information sent by the protocol matching module 11. Thus, the second switch Q2 is controlled to be turned on so that the electrical energy is allowed to be outputted from the device port 600 to the battery pack port 200 along the first transmission path L1 and the battery pack is charged. In an optional example, when controlling the second switch Q2 to be turned on, the power control unit 122 may also control the first switch Q1 to be turned on so that the loss of the electrical energy in a charging process is reduced. In addition, the third energy storage element 14 has the function of energy storage and filtering in the process where the battery pack is charged.

It is to be noted that the above are only preferred examples of the present application and the technical principles used therein. It is to be understood by those skilled in the art that the present application is not limited to the examples described herein. Those skilled in the art can make various apparent modifications, adaptations, and substitutions without departing from the scope of the present application. Therefore, while the present application is described in detail through the preceding examples, the present application is not limited to the preceding examples and may include more equivalent examples without departing from the concept of the present application. The scope of the present application is determined by the scope of the appended claims.

## Claims

1. An adapter (100a), comprising:
a housing (100b);
a battery pack port (200) comprising at least a positive terminal (200a) and a negative terminal (200b) for accessing a battery pack (1000);
a device port (600) comprising a plurality of universal serial bus(USB) ports (601, 602, 603) capable of accessing an electric device or a charging apparatus;
a protocol matching module (11) configured to perform a protocol handshake with the electric device or the charging apparatus accessed by the device port; and
a bidirectional direct current-direct current (DC-DC) conversion module (12) capable of converting electrical energy outputted by the battery pack into direct current power supply electrical energy or converting electrical energy from the charging apparatus into direct current charging electrical energy;
wherein the bidirectional DC-DC conversion module comprises:
a power switching element (121) disposed on a power transmission loop between the battery pack port and the device port to adjust a transmission direction and/or a magnitude of electrical energy in the power transmission loop; and
a power control unit (122) electrically connected to at least the power switching element to control a conducting state of the power switching element.

2. The adapter according to claim 1, wherein the power transmission loop comprises:
a first transmission path (L1) between the positive terminal and the device port; and
a second transmission path (L2) between the negative terminal and the device port.

3. The adapter according to claim 2, wherein the bidirectional DC-DC conversion module further comprises a first energy storage element (123) disposed on the first transmission path and capable of storing electrical energy during electrical energy transmission and discharging the electrical energy when the electrical energy transmission is interrupted.

4. The adapter according to claim 2, wherein the power switching element comprises:
a first switch (Q1) connected in series on the first transmission path to control electrical energy transmission from the battery pack port to the device port; and
a second switch (Q2) connected in parallel between the first transmission path and the second transmission path to control electrical energy transmission from the device port to the battery pack port.

5. The adapter according to claim 2, further comprising:
a second energy storage element (13) connected in parallel between the first transmission path and the second transmission path to discharge the electrical energy to the device port.

6. The adapter according to claim 2, further comprising:
a third energy storage element (14) connected in parallel between the first transmission path and the second transmission path to discharge the electrical energy to the battery pack port.

7. The adapter according to claim 1, wherein a voltage across the battery pack port is higher than a voltage across the device port.

8. The adapter according to claim 1, wherein a voltage across the battery pack port is less than or equal to 100 V.

9. The adapter according to claim 1, wherein a voltage across the device port is less than or equal to 20 V.

10. The adapter according to claim 1, wherein output power of the adapter is greater than or equal to 45 W and less than or equal to 240 W

11. The adapter according to claim 1, wherein output power of the adapter is greater than or equal to 400 W and less than or equal to 600 W

12. The adapter according to claim 1, wherein a ratio of a volume of the adapter to output power of the adapter is a power-to-volume ratio, and the power-to-volume ratio is higher than or equal to 0.1 W/cm³ and less than or equal to 0.2 W/cm³.

13. The adapter according to claim 1, wherein a volume of the adapter is greater than or equal to 4500 cm³ and less than or equal to 5000 cm³.

14. The adapter according to claim 1, wherein a working noise value of the adapter is greater than or equal to 45 dB and less than or equal to 55 dB.

15. The adapter according to claim 1, wherein a working noise value of the adapter is greater than or equal to 50 dB and less than or equal to 55 dB.
